Europäisches Patentamt

(19) European Patent Office    (11) Publication number: **0 042 678**

Office européen des brevets          **B1**

(12)    **EUROPEAN PATENT SPECIFICATION**

(45) Date of publication of patent specification: **16.01.85**

(21) Application number: **81302434.6**

(22) Date of filing: **02.06.81**

(51) Int. Cl.⁴: **C 09 D 7/00,** C 08 J 3/02, C 09 K 7/00, C 08 L 33/00, C 09 D 5/00

(54) **Method of thickening.**

(30) Priority: **13.06.80 GB 8019466**

(43) Date of publication of application:
**30.12.81 Bulletin 81/52**

(45) Publication of the grant of the patent:
**16.01.85 Bulletin 85/03**

(84) Designated Contracting States:
**BE CH DE FR IT LI NL**

(56) References cited:
**GB-A-2 017 159**
**US-A-3 734 873**
**US-A-3 849 361**
**US-A-3 867 330**
**US-A-4 022 736**
**US-E- 28 474**

(73) Proprietor: **SCOTT BADER COMPANY LIMITED**
**Wollaston**
**Wellingborough, Northamptonshire NN9 7RL**
**(GB)**

(72) Inventor: **Khan, Zubair Munir**
**8 Wantage Road**
**Irchester, Northants NN9 7HE (GB)**

(74) Representative: **Harrison, David Christopher**
**et al**
**MEWBURN ELLIS & CO 2/3 Cursitor Street**
**London EC4A 1BQ (GB)**

## Description

Thickeners for aqueous based compositions such as paints, adhesives, textile printing pastes, carpet backings, cosmetics, drilling muds, latices etc are usually natural or synthetic products supplied as solids or dilute solutions. Typical examples of natural or modified natural products are starches, carboxymethyl cellulose, hydroxyethyl cellulose etc. and among the synthetic products used are polyvinyl alcohol, sodium polyacrylate gels etc. These materials are often difficult to handle insofar as they are difficult to dissolve and use, they are not very efficient, they are variable in quality and possess other technical disadvantages like being prone to bacterial attack.

U.S. 3849361 discloses a method of preparing a water-dispersible suspension of a water soluble or water swellable vinyl polymer. The polymer is prepared by aqueous emulsion polymerization to provide a water-in-oil emulsion thereof. The emulsion is then dessicated and the dry polymer particles are then resuspended in a polyglycol or polyglycol ether. The resuspended material can be used as a thickener for water etc.

U.S. 3734873 discloses various methods of inverting a water-in-oil emulsion, namely (1) adding surfactant to water in which the polymer is to be dissolved, (2) adding surfactant to the water-in-oil emulsion itself or (3) mere agitation.

We have now discovered that an aqueous medium can be thickened by mixing the medium with a water-soluble polyacrylamide or polymethacrylamide homopolymer or copolymer (hereinafter "polymer") when the polymer is in solution in the aqueous phase of a water-in-oil emulsion.

Thus, such inverse (i.e. water-in-oil) emulsions of water soluble polyacrylamide and polymethacrylamide homopolymers and copolymers of these with acrylic or methacrylic acids, which are anionic monomers, cationic monomers such as dimethylaminoethyl methacrylate quarternised with dimethyl sulphate etc can be employed as efficient, easy to use thickeners. The ratios of these monomers can range from 100/0 (i.e. (meth) acrylamide homopolymer) to 10 (methyl acrylamide/90 comonomer). Minor amounts of other ethylenically unsaturated monomers may be included. Some of these inverse emulsions of high molecular weight, greater than $1 \times 10^6$, preferably greater than $6 \times 10^6$, have been used as flocculants. In this new use they overcome the well known problems of dissolving solid products which can take several hours since the polymer has always been in the aqueous phase.

In the present invention we have found that by reversing the emulsion (whether by the addition of water or the addition of a reversing surfactant and water) the low viscosity water in oil emulsion is almost instantaneously inverted to an extremely viscous paste of water soluble polymer in the aqueous phase.

Formulations can be provided wherein the oil phase of the inverse emulsion includes a reversing surfactant so that addition of pure water will cause reversion to an oil in water emulsion. But otherwise the addition of a water soluble inversion surfactant to either the inverse emulsion or the water causes the water in oil emulsion to revert and become water soluble and because the polymer is essentially already in the aqueous phase, rapid solubility occurs. Typically the dissolution in water takes around 1 minute compared to several hours for solid materials.

It is possible to produce lightly crosslinked products of this type by including a small amount, 0.1—5% by weight, of a di- or polyfunctional olefinically unsaturated compound such as allyl methacrylate, diallyl phthalate, divinyl benzene, triallyl isocyanurate or methylene bis-acrylamide in the polymer.

These water-in-oil emulsions are of low viscosity, typically 200—800 cps (0.2—0.8 Pa.s) at 25°C (e.g. 500 cps—0.5 Pa.s) and typically 15—40% solids (more typically 25—30%). They can easily be inverted in water based systems to give very high solution viscosities.

The water-in-oil emulsions typically consist of:—

15—40% (typically 25%) polymer solids
2—10% (typically 5%) oil soluble surfactant having a hydrophobe/lipophile balance (HLB) below 7
13—25% (typically 20%) oil phase usually a hydrocarbon such as white spirit, toluene, Isopar®* or a plasticiser such as dibutyl phthalate,
50% water.

Up to 5 p.p.h. of an inversion surfactant (usually water soluble) may be incorporated.

Sorbitan mono oleate can be used as an oil-soluble surfactant.

The main advantages of using these water in oil emulsions over other solid and liquid products are their ease of production, ease of handling, rapid solubility, efficiency, freedom from bacterial attack, salt stability and temperature stability coupled with low cost.

The following examples illustrate the use of these inverse emulsions as thickeners.

Example 1
Use in thickening emulsion paints.

In this example, Thickener A is a 25% solids water in oil emulsion, containing an inversion surfactant, of an acrylamide/sodium acrylate copolymer crosslinked with 0.5% of allyl methacrylate.

*®=Esso trade name.

The following paint formulation was used:—

| Water—① | 100 |
| Thickener | 2.2 (as solids content) |
| Dispersant | 1.8 (as solids content) |
| Antifoam | 0.9 |
| Pigments | 385.0 (Mixture of titanium dioxide and calcium carbonate |
| Binder latex | 298.0 |
| Water | 158.0 |

The binder latex used was a styrene/butyl acrylate emulsion of 55% solids.

The paints were made by dissolving the thickener in water (①) then adding the pigment dispersant and antifoam. The pigments were then dispersed in this mixture using a high speed stirrer. Finally the binder latex and water were added. Two paints were made, one using Thickener A, the other using a conventional hydroxyethyl cellulose thickener.

When Thickener A was used the ease of handling, ease of mixing and ease of dissolution were readily apparent. The rheology of the paints were similar and the viscosity of the paint made from Thickener A was slightly higher.

Using Thickener A, unlike the hydroxyethyl cellulose, paints may be made by omitting the thickener from the dispersion stage and post adding this after the binder latex. This method offers process and quality control advantages.

Example 2
Use in thickening carpet backing compounds.

Thickener B was used in this example and this is a 25% active water in oil emulsion, containing inversion surfactant, of acrylamide/sodium acrylate copolymer crosslinked with 0.25% of diallyl phthalate.

Two carpet backing compounds were made. These consisted of thickener styrene/butadiene latex, filler, dispersing agent for filling and antifoam. One mixture was made using Thickener B and the other using the same amount (on a solids basis) of a conventional acrylic emulsion thickener.

The use of Thickener B produced a compound having a viscosity 20% higher than the conventional product indicating a lower amount may be used to achieve a given viscosity.

Example 3
Use in thickening textile pigment printing pastes.

In this example Thickener C was used. This is a 25% active water in oil emulsion, containing inversion surfactant, of acrylamide/ammonium acrylate copolymer crosslinked with 0.50% of allyl methacrylate. This product was compared to a well known commercial product based on an ethylene/maleic anhydride polymer in dry powder form.

The Thickener C produced pastes which thicken in one minute compared to the lengthy time for the conventional product. In addition, unlike the conventional product, the addition of ammonia was not necessary.

Printing performance was similar.

Example 4
Use in thickening Drilling Muds for oil recovery.

In this example, Thickener D was used. This is a 25% active water in oil emulsion of an acrylamide/sodium acrylate copolymer. (No inversion surfactant is necessary in this example).

Two typical sea water based bentonite muds were made up one using Thickener D and the other using an equivalent amount of a conventional solid, high molecular weight carboxymethyl cellulose (CMC). The formulation based on Thickener D showed a higher viscosity, a higher yield point and lower fluid loss in addition to a much shorter dissolving/mixing time.

Example 5
Use in latex thickening.

In this example, Thickener E was used. This is a 25% active water in oil emulsion, containing an inversion surfactant, of an acrylamide/sodium acrylate copolymer cross-linked with 3% divinyl benzene.

Natural rubber latex was thickened using Thickener E and separately an equivalent amount of a conventional sodium polyacrylate gel thickener. The Thickener E was much easier to handle than the gel and exhibited greater thickening efficiency.

Example 6
Use in thickening water for a wallpaper paste.

In this example Thickener F was used. This is a 25% active water in oil emulsion containing an inversion surfactant of an acrylamide/sodium acrylate copolymer crosslinked with 0.1% of allyl methacrylate.

Water was thickened by stirring in 3% of Thickener F and in comparison an equivalent amount conventional dry starch paste. The materials produced similar viscosities but the Thickener F dissolved in 1 minute compared to 15 minutes for the starch. The thickened adhesive showed good open time, grab slip etc. and did not suffer from bacterial attack.

## Claims

1. A method of thickening an aqueous medium by mixing the medium with a water-soluble polyacrylamide or polymethacrylamide homopolymer or copolymer (hereinafter "polymer") characterized in that the polymer is admixed with the medium when the polymer is in solution in the aqueous phase of a water-in-oil emulsion.

2. A method according to claim 1, wherein the emulsion has a viscosity of 200—800 cps (0.2—0.8 Pa.s) when measured at 25°C.

3. A method according to claim 1 or claim 2, wherein the emulsion has a 15—40% polymer solids content and 13—25% of the emulsion is constituted by the oil phase.

4. A method according to claim 1, claim 2 or claim 3, wherein the polymer is a copolymer of a polyacrylamide with a polymethacrylamide or a copolymer of either or both of these with acrylic or methacrylic acid, a cationic monomer, or any mixture of these.

5. A method according to any one of the preceding claims, in which the said polymer is lightly crosslinked by incorporation of 0.1 to 5% by weight of a di- or poly-functional olefinically unsaturated compound.

6. A method according to claim 5, in which 0.25 to 3% by weight of the said unsaturated compound is incorporated in the polymer.

7. A method according to any one of the preceding claims, in which the said polymer makes up 15 to 40% by weight of the thickener.

8. A method according to claim 7, in which the said polymer makes up 25—30% by weight of the thickener.

9. A method according to any one of the preceding claims, in which an inversion surfactant is added to the thickener.

10. An aqueous medium thickened by the method of any one of the preceding claims.

## Revendications

1. Méthode d'épaississement d'un milieu aqueux en mélangeant le milieu à un homopolymère ou copolymère de polyacrylamide ou de polyméthacrylamide soluble dans l'eau (appelé ci-après "polymère") caractérisé en ce que le polymère est mélangé au milieu lorsque le polymère est en solution dans la phase aqueuse d'une émulsion eau dans l'huile.

2. Méthode selon la revendication 1 où l'émulsion a une viscosité de 200—800 cps (0,2—0,8 Pa.s) en mesurant à 25°C.

3. Méthode selon la revendication 1 ou la revendication 2 où l'émulsion a une teneur en solides du polymère de 15—40% et 13—25% de l'émulsion sont constitués de la phase huileuse.

4. Méthode selon le revendication 1, la revendication 2 ou la revendication 3 où le polymère est un copolymère d'un polyacrylamide avec un polyméthacrylamide ou un copolymère de l'un ou de deux de ceux-ci avec un acide acrylique ou méthacrylique, un monomère cationique ou tout mélange de ceux-ci.

5. Méthode selon l'une quelconque des revendications précédentes où ledit polymère est légèrement réticulé par incorporation de 0, 1 à 5% en poids d'un composé di- ou polyfonctionnel à insaturation oléfinique.

6. Méthode selon la revendication 5 où 0,25 à 3% en poids dudit composé insaturé sont incorporés dans le polymère.

7. Méthode selon l'une quelconque des revendication précédentes où ledit polymère forme 15 à 40% en poids de l'agent épaississant.

8. Méthode selon la revendication 7 où ledit polymère forme 25 à 30% en poids de l'agent épaississant.

9. Méthode selon l'une quelconque des revendications précédentes où un agent tensioactif d'inversion est ajouté à l'agent épaississant.

10. Milieu aqueux épaissi par la méthode selon l'une quelconque des revendications précédentes.

## Patentansprüche

1. Verfahren zum Verdicken eines wässrigen Mediums durch Mischen des Mediums mit einem wasserlöslichen Polyacrylamid- oder Polymethacrylamid-Homopolymer oder -Copolymer (nachfolgend "Polymer"), dadurch gekennzeichnet, daß das Polymer mit dem Medium zusammengemischt wird, wenn das Polymer in Lösung in der wässrigen Phase einer Wasser-in-Öl-Emulsion ist.

2. Verfahren nach Anspruch 1, worin die Emulsion eine Viskosität von 200 bis 800 cP (0,2—0,8 Pa.s), gemessen bei 25°C, hat.

3. Verfahren nach Anspruch 1 oder Anspruch 2, worin die Emulsion einen Polymer-Feststoffgehalt von 15 bis 40% hat und 13 bis 25% der Emulsion aus der Ölphase besteht.

4. Verfahren nach Anspruch 1, Anspruch 2 oder Anspruch 3, worin das Polymer ein Copolymer eines Polyacrylamids mit einem Polymethacrylamid oder ein Copolymer von einem oder beiden von diesen mit Acryl- oder Methacrylsäure, einem kationischen Monomer oder irgend einem Gemisch von diesen ist.

5. Verfahren nach irgend einem der vorhergehenden Ansprüche, worin das Polymer durch Einbringen von 0,1 bis 5 Gew.-% einer di- oder polyfunktionellen olefinisch ungesättigten Verbindung leicht vernetzt wird.

6. Verfahren nach Anspruch 5, worin 0,25 bis 3 Gew.-% der ungesättigten Verbindung in das Polymer eingebracht wird.

7. Verfahren nach irgend einem der vorhergehenden Ansprüche, worin das Polymer 15 bis 40 Gew.-% des Verdickungsmittels ausmacht.

8. Verfahren nach Anspruch 7, worin das Polymer 25 bis 30 Gew.-% des Verdickungsmittels ausmacht.

9. Verfahren nach irgend einem der vorhergehenden Ansprüche, worin ein Inversionstensid zu dem Verdickungsmittel gegeben wird.

10. Wässriges Medium, verdickt nach dem Verfahren irgend eines der vorhergehenden Ansprüche.